# EUROPEAN PATENT SPECIFICATION

(11) **EP 2 998 960 B1**
(45) Date of publication and mention of the grant of the patent: **17.06.2020**
(21) Application number: 15185682.0
(22) Date of filing: 17.09.2015
(51) Int. Cl.: G11B 27/28, G11B 27/10, G06F 16/74

(54) **METHOD AND DEVICE FOR VIDEO BROWSING**
VERFAHREN UND VORRICHTUNG ZUR VIDEODURCHSUCHUNG
PROCÉDÉ ET DISPOSITIF DE NAVIGATION VIDÉO

(30) Priority: 17.09.2014 CN 201410475165
(43) Date of publication of application: 23.03.2016
(73) Proprietor: Xiaomi Inc., Beijing 100085 (CN)
(72) Inventor: WANG, Baichao, 100085 BEIJING (CN); QIN, Qiuping, 100085 BEIJING (CN); HOU, Wendi, 100085 BEIJING (CN)
(74) Representative: Cabinet Beau de Loménie

(56) References cited:
- EP-A2- 0 660 327
- JP-A- 2012 010 265
- US-A- 5 732 146
- US-A1- 2005 046 699
- US-A1- 2006 036 948
- US-A1- 2007 237 225
- US-B1- 6 385 386

## Description

### TECHNICAL FIELD

The present disclosure relates to the field of computer technology, and more particularly, to a method and a device for video browsing.

### BACKGROUND

With the development of internet, network video has been used more and more frequently. When we acquire a video, we need to quickly browse the video to know the video contents. Therefore, how to quickly browse the video becomes an issue concerned by people.

Because the video is composed of continuous image frames, during the process of extracting keyframes of the video, a terminal segments the video into at least two shots; selects a group of keyframes for each shot in response to changes of image quality and video contents according to each shot boundary; and reproduces the keyframes on a screen at a proper speed to realize video browsing.

Document US 5 732 146, US 2005/046699, and JP 2012 010265 disclose methods of extracting keyframes of a video.

In the present document, a shot corresponds to a segment of video between two splice junction sites, shot boundaries corresponding to the beginning part and the end part of a shot.

In the process of achieving the present disclosure, it is found that the related art at least has the following defects: the terminal needs to extract the keyframes according to the shot boundary, but when the video is a continuous shot, or in other words contains only one integrated shot in where no shot boundary exist in the middle part of the video, it is impossible to extract the keyframes from the video.

### SUMMARY

To solve the problem of being unable to browse a video since the keyframe cannot be extracted from a continuous shot, the present invention provides a method and a device for video browsing.

According to a first aspect, the invention relates to a method for video browsing in accordance with claim 1. In a second aspect, the invention relates to a video browsing device in accordance with claims 6 and 11. In other aspects, the invention relates to a computer program in accordance with claim 12 and a recording medium in accordance with claim 13. Particular embodiments are set out in the dependent claims.

The technical solutions provided by the embodiments of the present disclosure may include the following advantageous effects:
the current image frame and its previous image frame in a video are compared to obtain target block information, the target block information being information obtained by comparing a target block in the current image frame with a target block in the previous image frame; and if the target block information satisfies a predetermined condition, the current image frame is determined as a keyframe. That is, the present disclosure may obtain the target block information by comparing the target block of the current image frame in the video, and then screen the keyframe according to the target block information without determining the keyframe through or according to a shot boundary, thus solving the problem of being unable to browse the video since the keyframe cannot be extracted from a continuous shot, and implementing the effect of improving the video playing efficiency.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for video browsing, according to an exemplary embodiment.
Fig. 2 is a flow chart showing a method for video browsing, according to another exemplary embodiment.
Fig. 3 is a block diagram showing a device for video browsing, according to an exemplary embodiment.
Fig. 4 is a block diagram showing a device for video browsing, according to an exemplary embodiment.
Fig. 5 is a block diagram showing a device for video browsing, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

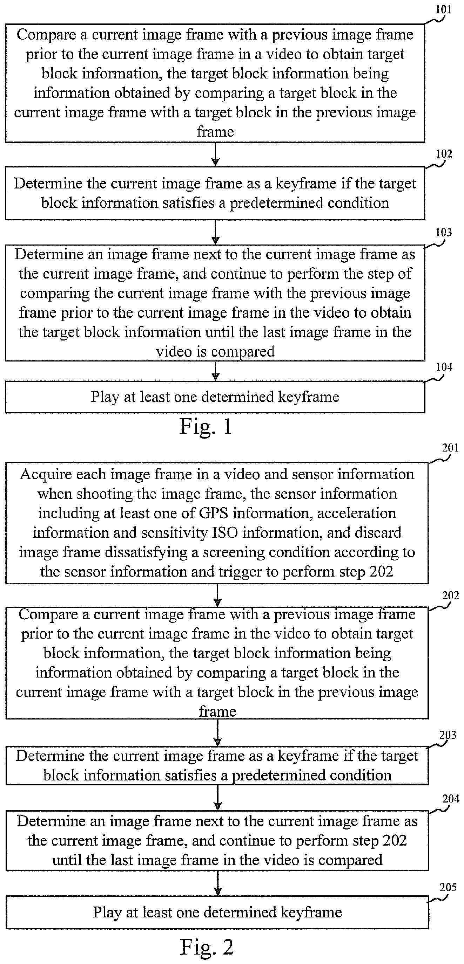

Fig. 1 is a flow chart showing a method for video browsing, according to an exemplary embodiment. The method for video browsing is applied in a terminal. As shown in Fig. 1, the method for video browsing includes the following steps.

In step 101, a current image frame and a previous image frame prior to the current image frame in a video are compared to obtain target block information, the target block information being information obtained by comparing a target block in the current image frame with a target block in the previous image frame.

The image frame is a unit screen of the video. The target block is obtained by dividing the contents in the image frame. The target block may either include at least one object or a part of the object. The embodiment does not define the manner of dividing the target block. The target block information refers to the information obtained by comparing a target block in the current image frame with a target block in the previous image frame prior to the current image frame.

In step 102, the current image frame is determined as a keyframe if the target block information satisfies a predetermined condition.

The keyframe refers to an image frame where an object or a key action in object movements in the entire video is located, and may represent the video content of a time period in the video.

Since the object in the image frame may be represented by the target block and the target block information may be used for representing the changes of the target blocks between two adjacent image frames, the terminal may detect whether the image frame is a keyframe according to the target block information so as to extract at least one keyframe from the video.

In step 103, an image frame next to the current image frame is determined as the current image frame, and the step of comparing the current image frame with the previous image frame prior to the current image frame in the video is continued to be performed to obtain the target block information until the last image frame in the video is compared.

In order to extract all the keyframes in the video, the terminal needs to compare all the image frames. Therefore, after the current image frame is compared, the image frame next to the current image frame may be determined as a new current image frame, and the current image frame may be determined as a previous image frame of the new current image frame. Then, the step 101 is continued to be performed, and the detecting procedure is ended until the last image frame in the video is taken as a current image frame and compared.

In step 104, at least one determined keyframe is played.

Since each keyframe may represent the video contents of a time period, by playing at least one determined keyframe in the terminal at a proper speed in sequence, the duration of playing the video may be compressed under the premise of not reducing the effective information to be expressed by the video, the video contents may be quickly browsed, and the video playing efficiency may be improved.

In conclusion, according to the method for video browsing provided by the present disclosure, the current image frame and its previous image frame in the video are compared to obtain the target block information, the target block information being information obtained by comparing the target block in the current image frame with the target block in the previous image frame; and the current image frame is determined as the keyframe if the target block information satisfies the predetermined condition. That is, the present disclosure may obtain the target block information by comparing the target block of the current image frame in the video, and then screen the keyframe according to the target block information without determining the keyframe through a shot boundary, thus the present disclosure solves the problem of being unable to browse the video since the keyframe cannot be extracted from a continuous shot, and achieves the effect of improving the video playing efficiency.

Fig. 2 is a flow chart showing a method for video browsing, according to another exemplary embodiment. The method for video browsing is applied in a terminal. As shown in Fig. 2, the method for video browsing includes the following steps.

In step 201, each image frame in the video and sensor information when shooting the image frame are acquired, the sensor information including at least one of GPS (Global Positioning System) information, acceleration information and sensitivity ISO information; and the image frames dissatisfying a screening condition according to the sensor information are discarded and step 202 is triggered to be performed.

In the embodiment, step 201 is optional. That is, the terminal may shoot a video through a camera and perform step 202 after acquiring the video. Or, after acquiring the video, the terminal may screen the image frames in the video and discard the image frames satisfying a discarding condition, so as to reduce the resource waste caused by processing the image frames satisfying the discarding condition and improve the efficiency of processing the image frames. The image frame is a unit screen of the video.

If the terminal needs to screen the image frames, then the terminal may collect the sensor information of each image frame when shooting the video through the camera and detect whether each image frame satisfies the discarding condition according to the sensor information. The sensor information may be at least one of the GPS information, the acceleration information and the sensitivity ISO information.

The terminal may set different discarding conditions according to different sensor information. When the sensor information is the GPS information, the shooting scene may be that the video is shot during movement. If the terminal stays in the same geographical position for a long time, the image frames shot at this time may be repeated; therefore, the discarding condition may be set as follows: when shooting the video during movement, the image frame having a distance between its GPS information and the GPS information of the previous image smaller than a GPS threshold is discarded. When the sensor information is the acceleration information, the shooting scene may be that the video is shot during movement. If the movement acceleration of the terminal is fast, the image frame shot at this time may be blurred; therefore, the discarding condition may be set as follows: the image frame having an acceleration larger than an acceleration threshold is discarded. When the sensor information is the ISO information, if the ISO is high, the image frame shot at this moment has more noisy points; therefore, the discarding condition may be set as follows: the image frame having an ISO larger than an ISO threshold is discarded. When the sensor information includes at least two of the GPS information, the acceleration information and the ISO information, the terminal may combine the respective discarding conditions of each sensor information and determine to discard the image frame when at least one of the sensor information satisfies the discarding conditions.

In step 202, a current image frame is compared with a previous image frame prior to the current image frame in a video to obtain target block information, the target block 11 information being information obtained by comparing a target block in the current image frame with a target block in the previous image frame.

The target block is obtained by dividing the contents in the image frame. The target block may either include at least one object or a part of the object, and is determined according to the manner of dividing the image frame. The terminal may perform an equal division operation on the image frame, for example, the terminal equally divides the image frame into M parts in a length direction and equally divided the image frame into N parts in a width direction to obtain MxN target blocks. Or, the terminal may divide the target block according to an interested minimum target in the image frame, i.e., each target block includes at least one minimum target. Or, the terminal may divide the target block according to the empirical values of developers, and the like. The embodiment does not restrict the manner of dividing the target block.

After obtaining the target block of the current image frame, the terminal may compare the target block in the current image frame with the target block in the previous image frame prior to the current image frame to obtain the target block information. The target block information is used for representing changes of the target blocks between two adjacent image frames.

In the invention, the comparing the current image frame with the previous image frame prior to the current image frame in the video to obtain the target block information includes:
1) comparing the target block in the previous image frame with the target block in the current image frame;
2) if the current image frame includes at least one target block nonexistent in the previous image frame, then determining each the nonexistent target block as a newly-added target block and setting flag bit information for the newly-added target block to obtain the target block information of each newly-added target block, the flag bit information being the number of the determined keyframe plus 1;
3) if the current image frame includes at least one target block existent in the previous image frame, determining each existent target block as an existing target block and calculating movement information of the existing target block relative to the corresponding target block in the previous image frame to obtain the target block information of each existing target block; and
4) if the previous image frame includes at least one target block nonexistent in the current image frame, determining each nonexistent target block as a disappeared target block to obtain the target block information of each disappeared target block.

The target block in the current image frame and the target block in the previous image frame may be compared in terms of characteristics. The characteristics may either be a color histogram, or the color histogram and textural characteristics. Euclidean distance may be used as the comparison manner. The comparison of the target blocks may have three results, which will be respectively described hereinafter.

First, the current image frame includes at least one target block nonexistent in the previous image frame. In this case, the terminal may determine the at least one nonexistent target block as the newly-added target block and set the flag bit information for the newly-added target block for identification.

The terminal may set the flag bit information of the newly-added target block as the number of the determined keyframe plus 1. It is supposed that s keyframes are determined before a kth image frame, then flag bit information of the newly-added target block in the kth image frame may be set as s+1; if the kth image frame is not a keyframe, then the flag bit information of the newly-added target block in a (k+1)th image frame may be still set as s+1. That is, the flag bit information of the newly-added target blocks in the image frames between the sth keyframe and the (s+1) th keyframe are all s+1.

Optionally, the terminal may also acquire information of the target block, such as position and identity, and determine the information such as the identity, the flag bit information and the position as the target block information of the newly-added target block.

Second, the current image frame includes at least one target block existent in the previous image frame. In this case, the terminal may determine the at least one existent target block as an existing target block and acquire movement information of the existing target block.

The movement information may be at least one of a movement displacement of the target block in the current image frame relative to the corresponding target block in the previous image frame, the number of moving times of the target block in the current image frame relative to the corresponding target block in the previous image frame, and a movement destination of the target block in the current image frame.

For example, when the movement information includes the movement displacement, it is supposed that the coordinate of the target block in the previous image frame is (10cm, 13cm), and the coordinate of the target block in the current image frame is (10cm, 15cm), then the displacement of the target block is 2cm. When the movement information includes the number of moving times, it is supposed that the number of moving times of the target block in the previous image frame is 2, and the position of the target block in the current image frame is different from the position of the target block in the previous image frame, then the number of moving times of the target block is determined to be 3. When the movement information includes the movement destination, if the target block is located in a central area of the current image frame, then the movement destination of the target block is determined to be the central area.

Optionally, the terminal may also acquire the identity and the flag bit information of the target block, and determine the identity, the flag bit information and the movement information as the target block information of the existing target block.

Third, the previous image frame includes the at least one target block nonexistent in the current image frame. In this case, the terminal may determine the at least one nonexistent target block as a disappeared target block, and determine the identity, the flag bit information and the movement information of the target block as the target block information of the disappeared target block.

In step 203, the current image frame is determined as a keyframe if the target block information satisfies a predetermined condition.

The keyframe refers to an image frame where an object or a key action in object movements in the entire video is located, and may represent the video content of a time period in the video. Since the object in the image frame may be represented by the target block and the target block information may be used for representing the changes of the target blocks between two adjacent image frames, the terminal may detect whether the current image frame is a keyframe according to the target block information so as to extract at least one keyframe from the video.

The terminal may determine the keyframe according to different target block information. The embodiment takes the target block information respectively including the movement information and the flag bit information as an example to illustrate a procedure of determining the keyframe.

First, the determining the current image frame as the keyframe if the target block information satisfies the predetermined condition includes:
1) reading the movement information of each existing target block from the target block information of the current image frame, the movement information including at least one of the number of moving times, movement displacement and movement destination of the existing target block;
2) detecting whether the number of the movement information which satisfies a movement condition is greater than a predetermined threshold; and
3) determining the current image frame as the keyframe when detecting that the number of the movement information which satisfies the movement condition is greater than the predetermined threshold.

The above-mentioned method of determining the keyframe is applied to a scene in which a foreground target is moving and a background changes little, or applied to a scene having a scaling background and without a foreground target.

Since the movement information may be at least one of the number of moving times, the movement displacement and the movement destination, when the movement information is different, the movement condition corresponding to the movement information is different. For example, when the movement information includes the number of moving times, the movement condition may be that the number of moving times is greater than a times threshold; when the movement information includes the movement displacement, the movement condition may be that the movement displacement is greater than a displacement threshold; when the movement information includes the movement destination, the movement condition may be a destination area; and when the movement information includes at least two of the number of moving times, the movement displacement and the movement destination, the respective movement conditions of each movement information may be combined, and when each movement information satisfies the respective movement condition, the movement information is determined to satisfy the movement condition.

For example, when the movement conditions are that the number of moving times exceeds 4 and the target area is the central area, then the movement information is determined to satisfy the movement conditions when the terminal detects that the number of moving times recorded in certain movement information is 5 and the movement destination is the central area.

After determining that the movement information satisfies the movement conditions, the terminal may also count the number of the movement information which satisfies the movement conditions and detect whether the number obtained through counting is greater than a predetermined threshold. If the terminal detects that the number obtained through counting is greater than the predetermined threshold, then the terminal determines that the target information of a majority of target blocks in the current image frame changes relative to the previous keyframe, and the current image frame may be determined as the keyframe. If the terminal detects that the number obtained through counting is smaller than the predetermined threshold, then the terminal determines that the target information of a minority of target blocks in the current image frame changes relative to the previous keyframe, and the current image frame may not be determined as the keyframe.

Second, the determining the current image frame as the keyframe if the target block information satisfies the predetermined condition includes:
1) reading the flag bit information of each target block from the target block information of the current image frame;
2) detecting whether flag bit information identical to the flag bit information of the disappeared target block exists in the flag bit information; and
3) determining the current image frame as the keyframe if detecting that no flag bit information identical to the flag bit information of the disappeared target block exists.

The foregoing method for determining the keyframe is applied to a scene having a background translating at a predetermined speed and without a foreground target, or applied to a scene having a background translating at a predetermined speed and having an unchanged foreground target.

Since the target block information further includes the flag bit information, the image frame is determined as the keyframe when certain flag bit information in the image frame is completely disappeared. When detecting whether the flag bit information is completely disappeared, the terminal may acquire the flag bit information of the disappeared target block in the current image frame, and detect whether flag bit information identical to the flag bit information of the disappeared target block exists in the flag bit information included in the current image frame. When the terminal detects that no flag bit information identical to the flag bit information of the disappeared target block exists in the flag bit information included in the current image frame, the flag bit information is determined to be completely disappeared. When the terminal detects that flag bit information identical to the flag bit information of the disappeared target block exists in the flag bit information included in the current image frame, the flag bit information is determined to be not completely disappeared.

With regard to an image frame including a character, sometimes an imperceptible posture change of the character needs to be captured. At this time, if the terminal divides the character into a target block and performs a detection, an important image frame may possibly be incorrectly determined as a non-keyframe due to the imperceptible change of the target block information, which causes losing of important information.

Therefore, the determining the current image frame as the keyframe if the target block information satisfies the predetermined condition includes:
1) if the current image frame includes a character, detecting whether the posture information of the character in the current image frame changes relative to the previous image frame, and detecting whether the target block information in the current image frame excluding the character satisfies the predetermined condition;
2) if detecting that the posture information of the character changes and the target block information in the current image frame excluding the character satisfies the predetermined condition, determining the current image frame as a keyframe.

The terminal may separate the character and the background in the current image frame, analyze the character posture, divide the background into target blocks, detect according to the target block information, and determine whether the image frame is a keyframe according to the analyzed result and the detected result. The posture information of the character includes facial expression or character posture.

There are multiple methods for the terminal to analyze the character posture, for example, the terminal may adopt ASM (Active Shape Model) algorithm or AAM (Active Appearance Model) algorithm to position face feature points, and then extract the features of critical organs, and classify the features according to expression. When the terminal detects that the expression classification of the features in the current image frame differs from the expression classification of the features in the previous image frame, the current image frame is determined as the keyframe. The process of detecting the target block information by the terminal is identical to the foregoing detecting process, which will not be elaborated herein.

It should be additionally noted that the terminal may also determine the keyframe according to the sensor information. For example, when the sensor information is the GPS information, the GPS information may be compared with the GPS information of the previous image frame. When a distance between the GPS information and the GPS information of the previous image frame is greater than a GPS threshold, the current image frame corresponding to the GPS information is determined as the keyframe.

In step 204, an image frame next to the current image frame is determined as the current image frame to continue to perform step 202, until the last image frame in the video is compared.

In order to extract all the keyframes in the video, the terminal needs to compare all the image frames. Therefore, after the current image frame is compared, the image frame next to the current image frame may be determined as a new current image frame, and the current image frame may be determined as a previous image frame of the new current image frame. The step 202 is continued to be performed and the detecting procedure is ended until the last image frame in the video is taken as a current image frame and compared.

In step 205, at least one determined keyframe is played.

Since each keyframe may represent the video contents of a time period, the at least one determined keyframe is played in the terminal at a proper frame speed in sequence. Thereby, the duration of playing the video may be compressed under the premise of not reducing the effective information to be expressed by the video, the video contents may be browsed quickly, and the video playing efficiency may be improved.

Optionally, the terminal may also store at least one keyframe, and thus convert the video into a short video.

In conclusion, according to the method for video browsing provided by the present disclosure, the current image frame is compared with its previous image frame in the video to obtain the target block information, the target block information being information obtained by comparing the target block in the current image frame with the target block in the previous image frame; and the current image frame is determined as the keyframe if the target block information satisfies the predetermined condition. That is, the present disclosure may obtain the target block information by comparing the target block of the image frame in the video, and then screen the keyframe according to the target block information without determining the keyframe by using a shot boundary, thus the present disclosure solves the problem of being unable to browse the video since the keyframe cannot be extracted from a continuous shot, and achieves the effect of improving the video playing efficiency.

Moreover, the present disclosure acquires each image frame in the video and the sensor information when shooting the image frame, and discards the image frame which dissatisfies the screening condition according to the sensor information, thus reduces the resource waste caused by processing the image frames which satisfies the discarding condition and improves the efficiency of processing the image frames.

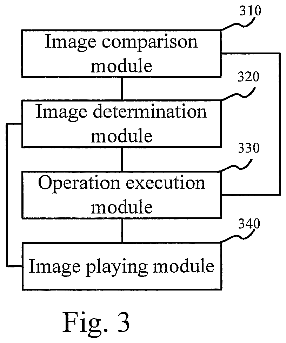

Fig. 3 is a block diagram showing a device for video browsing, according to an exemplary embodiment. The device for video browsing is applied in a terminal. As shown in Fig. 3, the device for video browsing includes: an image comparison module 310, an image determination module 320, an operation execution module 330 and an image playing module 340.

The image comparison module 310 is configured to compare a current image frame with a previous image frame prior to the current image frame in a video to obtain target block information, the target block information being information obtained by comparing a target block in the current image frame with a target block in the previous image frame.

The image determination module 320 is configured to determine the current image frame as a keyframe when the target block information obtained by the image comparison module 310 satisfies a predetermined condition.

The operation execution module 330 is configured to determine an image frame next to the current image frame as the current image frame, and continues to perform the operation of comparing the current image frame in the video with the previous image frame prior to the current image frame to obtain the target block information until the last image frame in the video is compared.

The image playing module 340 is configured to play at least one keyframe determined by the image determination module 320.

In conclusion, according to the device for video browsing provided by the present disclosure, the current image frame is compared with the previous image frame prior to the current image frame in the video to obtain the target block information, the target block information being information obtained by comparing the target block in the current image frame with the target block in the previous image frame; and the current image frame is determined as the keyframe if the target block information satisfies the predetermined condition. That is, the present disclosure obtains the target block information by comparing the target block of the image frame in the video, and then screen the keyframe according to the target block information without determining the keyframe by using a shot boundary, thus solves the problem of being unable to browse the video since the keyframe cannot be extracted from a continuous shot, and achieves the effect of improving the video playing efficiency.

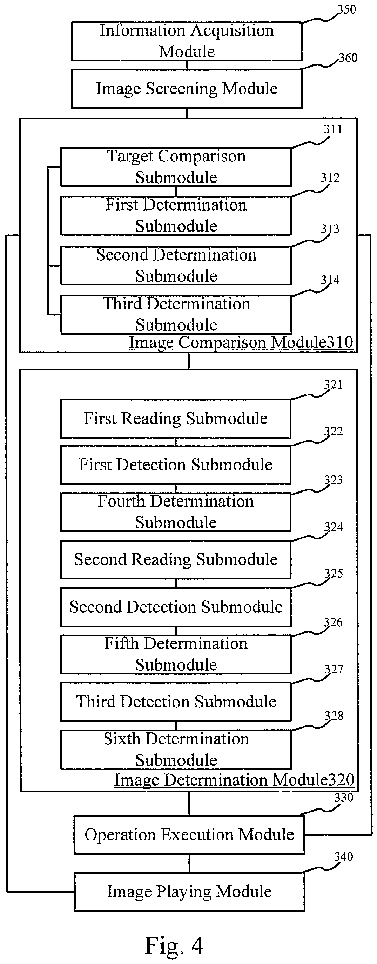

Fig. 4 is a block diagram showing a device for video browsing, according to an exemplary embodiment. The device for video browsing is applied in a terminal. As shown in Fig. 4, the device for video browsing includes: an image comparison module 310, an image determination module 320, an operation execution module 330 and an image playing module 340.

The image comparison module 310 is configured to compare a current image frame with a previous image frame prior to the current image frame in a video to obtain target block information, the target block information being information obtained by comparing a target block in the current image frame with a target block in the previous image frame.

The image determination module 320 is configured to determine the current image frame as a keyframe when the target block information obtained by the image comparison module 310 satisfies a predetermined condition.

The operation execution module 330 is configured to determine an image frame next to the current image frame as the current image frame, and continues to perform the operation of comparing the current image frame with the previous image frame prior to the current image frame in the video to obtain the target block information until the last image frame in the video is compared.

The image playing module 340 is configured to play at least one keyframe determined by the image determination module 320. The image comparison module 310 includes: a target comparison submodule 311, a first determination submodule 312, a second determination submodule 313 and a third determination submodule 314.

The target comparison submodule 311 is configured to compare the target block in the previous image frame with the target block in the current image frame.

The first determination submodule 312 is configured to, when the current image frame includes at least one target block nonexistent in the previous image frame through the comparison of the target comparison submodule 311, determine each nonexistent target block as a newly-added target block and set flag bit information for the newly-added target block to obtain the target block information of each newly-added target block, the flag bit information being the number of the determined keyframe plus 1.

The second determination submodule 313 is configured to, when the current image frame includes at least one target block existent in the previous image frame through the comparison of the target comparison submodule 311, determine each existent target block as an existing target block and calculate movement information of the existing target block in the current image frame relative to the corresponding target block in the previous image frame to obtain the target block information of each existing target block.

The third determination submodule 314 is configured to, when the previous image frame includes at least one target block nonexistent in the current image frame through the comparison of the target comparison submodule 311, determine each nonexistent target block as a disappeared target block to obtain the target block information of each disappeared target block.

Optionally, the image determination module 320 includes: a first reading submodule 321, a first detection submodule 322 and a fourth determination submodule 323.

The first reading submodule 321 is configured to read the movement information of each existing target block from the target block information of the current image frame, the movement information including at least one of the number of moving times, a movement displacement and a movement destination of the existing target block.

The first detection submodule 322 is configured to detect whether the number of the movement information satisfying a movement condition is greater than a predetermined threshold.

The fourth determination submodule 323 is configured to determine the current image frame as the keyframe when the first detection submodule 322 detects that the number of the movement information satisfying the movement condition is greater than the predetermined threshold.

Optionally, the image determination module 320 includes: a second reading submodule 324, a second detection submodule 325 and a fifth determination submodule 326.

The second reading submodule 324 is configured to read the flag bit information of each target block from the target block information of the current image frame.

The second detection submodule 325 is configured to detect whether flag bit information identical to the flag bit information of the disappeared target block exists in the flag bit information.

The fifth determination submodule 326 is configured to determine the current image frame as the keyframe when the second detection submodule 325 detects that no flag bit information identical to the flag bit information of the disappeared target block exists.

Optionally, the device for video browsing further includes: an information acquisition module 350 and an image screening module 360.

The information acquisition module 350 is configured to acquire each image frame in the video and sensor information when shooting the image frame, the sensor information including at least one of GPS (Global Positioning System) information, acceleration information and sensitivity ISO information.

The image screening module 360 is configured to discard the image frame which dissatisfies the screening condition according to the sensor information acquired by the information acquisition module 350 and trigger to perform the operation of comparing the current image frame with the previous image frame prior to the current image frame in the video to obtain the target block information.

Optionally, the image determination module 320 includes: a third detection submodule 327 and a sixth determination submodule 328.

The third detection submodule 327 is configured to, when the current image frame includes a character, detect whether posture information of the character in the current image frame changes relative to the previous image frame, and detect whether the target block information in the current image frame excluding the character satisfies the predetermined condition.

The sixth determination submodule 328 is configured to, when the third detection submodule 327 detects that the posture information of the character changes and the target block information in the current image frame excluding the character satisfies the predetermined condition, determine the current image frame as a keyframe.

In conclusion, according to the device for video browsing provided by the present disclosure, the current image frame and its previous image frame in the video are compared to obtain the target block information, the target block information being information obtained by comparing the target block in the current image frame with the target block in the previous image frame; and the current image frame is determined as the keyframe if the target block information satisfies the predetermined condition. The present disclosure may obtain the target block information by comparing the target blocks of the image frames in the video, and then screen the keyframe according to the target block information without determining the keyframe by using a shot boundary, thus solves the problem of being unable to browse the video since the keyframe cannot be extracted from a continuous shot, and achieves the effect of improving the video playing efficiency.

Moreover, the present disclosure acquires each image frame in the video and the sensor information when shooting the image frame, and discards the image frame which dissatisfies the screening condition according to the sensor information, so as to reduce the resource waste caused by processing the image frames satisfying the discarding condition and improve the efficiency of processing the image frames.

With respect to the devices in the above embodiments, the specific manners for performing operations for individual modules therein have been described in detail in the embodiments regarding the methods, which will not be elaborated herein.

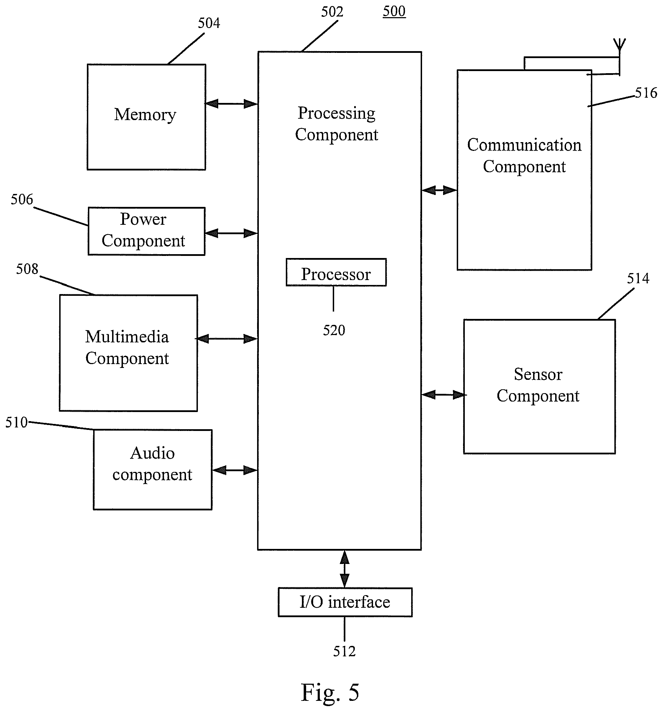

Fig. 5 is a block diagram showing a device 500 for video browsing, according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. It is intended that the specification and examples be considered as exemplary only, with a scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for video browsing, the method comprises:
comparing (101) a current image frame with an adjacent previous image frame prior to the current image frame in a video to obtain target block information, the target block information being information obtained by comparing a target block in the current image frame with a target block in the adjacent previous image frame, a target block being obtained by dividing contents in an image frame, the method being **characterized in that** the step of comparing (101) comprises:
comparing the target block in the adjacent previous image frame and the target block in the current image frame;
if the current image frame comprises at least one target block nonexistent in the adjacent previous image frame, determining each nonexistent target block as a newly-added target block and setting flag bit information for the newly-added target block to obtain the target block information of each newly-added target block, the flag bit information being 1 plus the number of keyframes that are determined before the current image frame;
if the current image frame comprises at least one target block existent in the adjacent previous image frame, determining each existent target block as an existing target block and calculating movement information of the existing target block in the current image frame relative to the corresponding target block in the adjacent previous image frame to obtain the target block information of each existing target block; and
if the adjacent previous image frame comprises at least one target block nonexistent in the current image frame, determining each nonexistent target block as a disappeared target block to obtain the target block information of each disappeared target block;
determining (102) the current image frame as a keyframe if the target block information satisfies a predetermined condition;
determining (103) an image frame next to the current image frame as the current image frame, and continuing to perform the step of comparing the current image frame with the adjacent previous image frame prior to the current image frame in the video to obtain the target block information until the comparison of the last image frame in the video is completed; and
playing (104) at least one determined keyframe in sequence at a proper speed.

2. The method according to claim 1, **characterized in that**, the step of determining the current image frame as the keyframe if the target block information satisfies the predetermined condition comprises:
reading the movement information of each existing target block from the target block information of the current image frame, the movement information comprising at least one of the number of moving times, a movement displacement and a movement destination of the existing target block;
detecting whether the number of the movement information satisfying a movement condition is greater than a predetermined threshold; and
determining the current image frame as the keyframe if detecting that the number of the movement information satisfying the movement condition is greater than the predetermined threshold.

3. The method according to claim 1, **characterized in that**, the step of determining the current image frame as the keyframe if the target block information satisfies the predetermined condition comprises:
reading the flag bit information of each target block from the target block information of the current image frame;
detecting whether flag bit information identical to the flag bit information of the disappeared target block exists in the flag bit information; and
determining the current image frame as the keyframe if detecting that no flag bit information identical to the flag bit information of the disappeared target block exists.

4. The method according to any one of claims 1 to 3, **characterized in that**, the method further comprises:
acquiring (201) each image frame in the video and sensor information when shooting the image frame, the sensor information comprising at least one of Global Positioning System GPS information, acceleration information and sensitivity ISO information; and
discarding the image frame dissatisfying a screening condition according to the sensor information, and triggering to perform the step (202) of comparing the current image frame with the adjacent previous image frame prior to the current image frame in the video to obtain the target block information.

5. The method according to any one of claims 1 to 4, **characterized in that**, the determining the current image frame as the keyframe if the target block information satisfies the predetermined condition comprises:
if the current image frame comprises a character, detecting whether posture information of the character in the current image frame changes relative to the adjacent previous image frame, and detecting whether the target block information in the current image frame excluding the character satisfies the predetermined condition; and
if detecting that the posture information of the character changes and the target block information in the current image frame excluding the character satisfies the predetermined condition, determining the current image frame as the keyframe.

6. A device for video browsing, the device comprises:
an image comparison module (310) configured to compare a current image frame with an adjacent previous image frame prior to the current image frame in a video to obtain target block information, the target block information being information obtained by comparing a target block in the current image frame with a target block in the adjacent previous image frame, a target block being obtained by dividing contents in an image frame, the device being **characterized in that** the image comparison module (310) comprises:
a target comparison submodule (311) configured to compare the target block in the adjacent previous image frame with the target block in the current image frame;
a first determination submodule (312) configured to, if the current image frame comprises at least one target block nonexistent in the adjacent previous image frame through the comparison of the target comparison submodule, determine each nonexistent target block as a newly-added target block and set flag bit information for the newly-added target block to obtain the target block information of each newly-added target block, the flag bit information being 1 plus the number of keyframes that are determined before the current image frame;
a second determination submodule (313) configured to, if the current image frame comprises at least one target block existent in the previous image frame through the comparison of the target comparison submodule, determine each existent target block as an existing target block and calculate movement information of the existing target block in the current image frame relative to the corresponding target block in the previous image frame to obtain the target block information of each existing target block; and
a third determination submodule (314) configured to, if the previous image frame comprises at least one target block nonexistent in the current image frame through the comparison of the target comparison submodule, determine each nonexistent target block as a disappeared target block to obtain the target block information of each disappeared target block;
an image determination module (320) configured to determine the current image frame as a keyframe if the target block information obtained by the image comparison module satisfies a predetermined condition;
an operation execution module (330) configured to determine an image frame next to the current image frame as the current image frame, and continue to perform the step of comparing the current image frame with the adjacent previous image frame prior to the current image frame in the video to obtain the target block information until the comparison of the last image frame in the video is completed; and
an image playing module (340) configured to play at least one keyframe determined by the image determination module in sequence at a proper speed.

7. The device according to claim 6, **characterized in that**, the image determination module comprises:
a first reading submodule (321) configured to read the movement information of each existing target block from the target block information of the current image frame, the movement information comprising at least one of the number of moving times, a movement displacement and a movement destination of the existing target block;
a first detection submodule (322) configured to detect whether the number of the movement information satisfying a movement condition is greater than a predetermined threshold; and
a fourth determination submodule (323) configured to determine the current image frame as the keyframe if the first detection submodule detects that the number of the movement information satisfying the movement condition is greater than the predetermined threshold.

8. The device according to claim 6, **characterized in that**, the image determination module comprises:
a second reading submodule (324) configured to read the flag bit information of each target block from the target block information of the current image frame;
a second detection submodule (325) configured to detect whether flag bit information identical to the flag bit information of the disappeared target block exists in the flag bit information; and
a fifth determination submodule (326) configured to determine the current image frame as the keyframe if the second detection submodule detects that no flag bit information identical to the flag bit information of the disappeared target block exists.

9. The device according to any one of claims 6 to 8, **characterized in that**, the device further comprises:
an information acquisition module (350) configured to acquire each image frame in the video and sensor information when shooting the image frame, the sensor information comprising at least one of Global Positioning System GPS information, acceleration information and sensitivity ISO information; and
an image screening module (360) configured to discard the image frame dissatisfying a screening condition according to the sensor information acquired by the information acquisition module and trigger to perform the operation of comparing the current image frame with the adjacent previous image frame prior to the current image frame in the video to obtain the target block information.

10. The device of any one of claim 6 to 9, **characterized in that**, the image determination module comprises:
a third detection submodule (327) configured to, if the current image frame comprises a character, detect whether posture information of the character in the current image frame changes relative to the adjacent previous image frame, and detect whether the target block information in the current image frame excluding the character satisfies the predetermined condition; and
a sixth determination submodule (328) configured to, if the third detection submodule detects that the posture information of the character changes and the target block information in the current image frame excluding the character satisfies the predetermined condition, determine the current image frame as the keyframe.

11. A device for video browsing, the device comprises:
a processor (502) ; and
a memory (504) for storing instructions executable by the processor;
wherein the processor is configured to:
compare a current image frame with an adjacent previous image frame prior to the current image frame in a video to obtain target block information, the target block information being information obtained by comparing a target block in the current image frame with a target block in the adjacent previous image frame, a target block being obtained by dividing contents in an image frame, wherein the device is **characterized in that** the processor is configured to:
compare the target block in the adjacent previous image frame and the target block in the current image frame;
if the current image frame comprises at least one target block nonexistent in the adjacent previous image frame, determine each nonexistent target block as a newly-added target block and set flag bit information for the newly-added target block to obtain the target block information of each newly-added target block, the flag bit information being 1 plus the number of keyframes that are determined before the current image frame;
if the current image frame comprises at least one target block existent in the adjacent previous image frame, determine each existent target block as an existing target block and calculate movement information of the existing target block in the current image frame relative to the corresponding target block in the adjacent previous image frame to obtain the target block information of each existing target block; and
if the adjacent previous image frame comprises at least one target block nonexistent in the current image frame, determine each nonexistent target block as a disappeared target block to obtain the target block information of each disappeared target block;
determine the current image frame as a keyframe if the target block information satisfies a predetermined condition;
determine an image frame next to the current image frame as the current image frame, and continue to perform the step of comparing the current image frame with the adjacent previous image frame prior to the current image frame in the video to obtain the target block information until the comparison of the last image frame in the video is completed; and
playing at least one determined keyframe in sequence at a proper speed.

12. A computer program including instructions for executing the steps of a method for video browsing according to any one of claims 1 to 5 when said program is executed by a computer.

13. A recording medium readable by a computer and having recorded thereon a computer program including instructions for executing the steps of a method for video browsing according to any one of claims 1 to 5.

## Patentansprüche

1. Verfahren zum Video-Browsing, wobei das Verfahren umfasst:
Vergleichen (101) eines aktuellen Einzelbilds mit einem angrenzenden vorherigen Einzelbild vor dem aktuellen Einzelbild in einem Video, um Zielblockinformationen zu erhalten, wobei die Zielblockinformationen Informationen sind, die durch Vergleichen eines Zielblocks in dem aktuellen Einzelbild mit einem Zielblock in dem angrenzenden vorherigen Einzelbild erhalten werden, wobei ein Zielblock durch Unterteilen von Inhalt in einem Einzelbild erhalten wird, wobei das Verfahren **dadurch gekennzeichnet ist, dass** der Schritt des Vergleichens (101) umfasst:
Vergleichen des Zielblocks in dem angrenzenden vorherigen Einzelbild und des Zielblocks in dem aktuellen Einzelbild,
wenn das aktuelle Einzelbild mindestens einen Zielblock umfasst, der in dem angrenzenden vorherigen Einzelbild nicht existiert, Bestimmen jedes nicht existierenden Zielblocks als einen neu hinzugefügten Zielblock und Setzen von Flag-Bit-Informationen für den neu hinzugefügten Zielblock, um die Zielblockinformationen jedes neu hinzugefügten Zielblocks zu erhalten, wobei es sich bei den Flag-Bit-Informationen um 1 plus der Anzahl von Schlüsselbildern handelt, die vor dem aktuellen Einzelbild bestimmt werden,
wenn das aktuelle Einzelbild mindestens einen Zielblock umfasst, der in dem angrenzenden vorherigen Einzelbild existiert, Bestimmen jedes existierenden Zielblocks als einen existierenden Zielblock und Berechnen von Bewegungsinformationen des existierenden Zielblocks in dem aktuellen Einzelbild in Bezug auf den entsprechenden Zielblock in dem angrenzenden vorherigen Einzelbild, um die Zielblockinformationen jedes existierenden Zielblocks zu erhalten, und
wenn das angrenzende vorherige Einzelbild mindestens einen Zielblock umfasst, der in dem aktuellen Einzelbild nicht existiert, Bestimmen jedes nicht existierenden Zielblocks als einen verschwundenen Zielblock, um die Zielblockinformationen jedes verschwundenen Zielblocks zu erhalten,
Bestimmen (102) des aktuellen Einzelbilds als ein Schlüsselbild, wenn die Zielblockinformationen eine vorher bestimmte Bedingung erfüllen,
Bestimmen (103) eines Einzelbilds neben dem aktuellen Einzelbild als das aktuelle Einzelbild und Fortsetzen des Durchführens des Schritts des Vergleichens des aktuellen Einzelbilds mit dem angrenzenden vorherigen Einzelbild vor dem aktuellen Einzelbild in dem Video, um die Zielblockinformationen zu erhalten, bis der Vergleich des letzten Einzelbilds in dem Video abgeschlossen ist, und
Abspielen (104) von mindestens einem bestimmten Schlüsselbild der Reihe nach mit einer passenden Geschwindigkeit.

2. Verfahren nach Anspruch 1, **dadurch gekennzeichnet, dass** der Schritt des Bestimmens des aktuellen Einzelbilds als das Schlüsselbild, wenn die Zielblockinformationen die vorher bestimmte Bedingung erfüllen, umfasst:
Lesen der Bewegungsinformationen jedes existierenden Zielblocks aus den Zielblockinformationen des aktuellen Einzelbilds, wobei die Bewegungsinformationen mindestens eine/n von der Anzahl von Bewegungszeiten, einer Bewegungsverlagerung und einem Bewegungszielort des existierenden Zielblocks umfassen,
Erfassen, ob die Anzahl der Bewegungsinformationen, die eine Bewegungsbedingung erfüllen, größer als ein vorher bestimmter Grenzwert ist, und
Bestimmen des aktuellen Einzelbilds als das Schlüsselbild, wenn erfasst wird, dass die Anzahl der Bewegungsinformationen, die die Bewegungsbedingung erfüllen, größer als der vorher bestimmte Grenzwert ist.

3. Verfahren nach Anspruch 1, **dadurch gekennzeichnet, dass** der Schritt des Bestimmens des aktuellen Einzelbilds als das Schlüsselbild, wenn die Zielblockinformationen die vorher bestimmte Bedingung erfüllen, umfasst:
Lesen der Flag-Bit-Informationen jedes Zielblocks aus den Zielblockinformationen des aktuellen Einzelbilds,
Erfassen, ob Flag-Bit-Informationen, die mit den Flag-Bit-Informationen des verschwundenen Zielblocks identisch sind, in den Flag-Bit-Informationen existieren, und
Bestimmen des aktuellen Einzelbilds als das Schlüsselbild, wenn erfasst wird, dass keine Flag-Bit-Informationen, die mit den Flag-Bit-Informationen des verschwundenen Zielblocks identisch sind, existieren.

4. Verfahren nach einem der Ansprüche 1 bis 3, **dadurch gekennzeichnet, dass** das Verfahren ferner umfasst:
Beziehen (201) von jedem Einzelbild in dem Video und von Sensorinformationen beim Aufnehmen des Einzelbilds, wobei die Sensorinformationen mindestens eine von Globalen Positionierungssystem-GPS-Informationen, Beschleunigungsinformationen und Empfindlichkeits-ISO-Informationen umfassen, und
Verwerfen des Einzelbilds, das eine Überprüfungsbedingung gemäß den Sensorinformationen nicht erfüllt, und Auslösen des Durchführens des Schritts (202) des Vergleichens des aktuellen Einzelbilds mit dem angrenzenden vorherigen Einzelbild vor dem aktuellen Einzelbild in dem Video, um die Zielblockinformationen zu erhalten.

5. Verfahren nach einem der Ansprüche 1 bis 4, **dadurch gekennzeichnet, dass** das Bestimmen des aktuellen Einzelbilds als das Schlüsselbild, wenn die Zielblockinformationen die vorher bestimmte Bedingung erfüllen, umfasst:
wenn das aktuelle Einzelbild eine Person umfasst, Erfassen, ob sich Haltungsinformationen der Person in dem aktuellen Einzelbild in Bezug auf das angrenzende vorherige Einzelbild ändern, und Erfassen, ob die Zielblockinformationen in dem aktuellen Einzelbild unter Ausschluss der Person die vorher bestimmte Bedingung erfüllen, und
wenn erfasst wird, dass sich die Haltungsinformationen der Person ändern und die Zielblockinformationen in dem aktuellen Einzelbild unter Ausschluss der Person die vorher bestimmte Bedingung erfüllen, Bestimmen des aktuellen Einzelbilds als das Schlüsselbild.

6. Vorrichtung zum Video-Browsing, wobei die Vorrichtung umfasst:
ein Bildvergleichsmodul (310), das dazu ausgestaltet ist, ein aktuelles Einzelbild mit einem angrenzenden vorherigen Einzelbild vor dem aktuellen Einzelbild in einem Video zu vergleichen, um Zielblockinformationen zu erhalten, wobei die Zielblockinformationen Informationen sind, die durch Vergleichen eines Zielblocks in dem aktuellen Einzelbild mit einem Zielblock in dem angrenzenden vorherigen Einzelbild erhalten werden, wobei ein Zielblock durch Unterteilen von Inhalt in einem Einzelbild erhalten wird, wobei die Vorrichtung **dadurch gekennzeichnet ist, dass** das Bildvergleichsmodul (310) umfasst:
ein Zielvergleichsteilmodul (311), das dazu ausgestaltet ist, den Zielblock in dem angrenzenden vorherigen Einzelbild mit dem Zielblock in dem aktuellen Einzelbild zu vergleichen,
ein erstes Bestimmungsteilmodul (312), das dazu ausgestaltet ist, wenn das aktuelle Einzelbild durch den Vergleich des Zielvergleichsteilmoduls mindestens einen Zielblock umfasst, der in dem angrenzenden vorherigen Einzelbild nicht existiert, jeden nicht existierenden Zielblock als einen neu hinzugefügten Zielblock zu bestimmen und Flag-Bit-Informationen für den neu hinzugefügten Zielblock zu setzen, um die Zielblockinformationen jedes neu hinzugefügten Zielblocks zu erhalten, wobei es sich bei den Flag-Bit-Informationen um 1 plus der Anzahl von Schlüsselbildern handelt, die vor dem aktuellen Einzelbild bestimmt werden,
ein zweites Bestimmungsteilmodul (313), das dazu ausgestaltet ist, wenn das aktuelle Einzelbild durch den Vergleich des Zielvergleichsteilmoduls mindestens einen Zielblock umfasst, der in dem angrenzenden vorherigen Einzelbild existiert, jeden existierenden Zielblock als einen existierenden Zielblock zu bestimmen und Bewegungsinformationen des existierenden Zielblocks in dem aktuellen Einzelbild in Bezug auf den entsprechenden Zielblock in dem angrenzenden vorherigen Einzelbild zu berechnen, um die Zielblockinformationen jedes existierenden Zielblocks zu erhalten, und
ein drittes Bestimmungsteilmodul (314), das dazu ausgestaltet ist, wenn das vorherige Einzelbild durch den Vergleich des Zielvergleichsteilmoduls mindestens einen Zielblock umfasst, der in dem aktuellen Einzelbild nicht existiert, jeden nicht existierenden Zielblock als einen verschwundenen Zielblock zu bestimmen, um die Zielblockinformationen jedes verschwundenen Zielblocks zu erhalten,
ein Bildbestimmungsmodul (320), das dazu ausgestaltet ist, das aktuelle Einzelbild als ein Schlüsselbild zu bestimmen, wenn die Zielblockinformationen, die von dem Bildvergleichsmodul erhalten werden, eine vorher bestimmte Bedingung erfüllen,
ein Arbeitsschrittausführungsmodul (330), das dazu ausgestaltet ist, ein Einzelbild neben dem aktuellen Einzelbild als das aktuelle Einzelbild zu bestimmen und das Durchführen des Schritts des Vergleichens des aktuellen Einzelbilds mit dem angrenzenden vorherigen Einzelbild vor dem aktuellen Einzelbild in dem Video fortzusetzen, um die Zielblockinformationen zu erhalten, bis der Vergleich des letzten Einzelbilds in dem Video abgeschlossen ist, und
ein Bildabspielmodul (340), das dazu ausgestaltet ist, mindestens ein Schlüsselbild, das von dem Bildbestimmungsmodul bestimmt wird, der Reihe nach mit einer passenden Geschwindigkeit abzuspielen.

7. Vorrichtung nach Anspruch 6, **dadurch gekennzeichnet, dass** das Bildbestimmungsmodul umfasst:
ein erstes Leseteilmodul (321), das dazu ausgestaltet ist, die Bewegungsinformationen jedes existierenden Zielblocks aus den Zielblockinformationen des aktuellen Einzelbilds zu lesen, wobei die Bewegungsinformationen mindestens eine/n von der Anzahl von Bewegungszeiten, einer Bewegungsverlagerung und einem Bewegungszielort des existierenden Zielblocks umfassen,
ein erstes Erfassungsteilmodul (322), das dazu ausgestaltet ist, zu erfassen, ob die Anzahl der Bewegungsinformationen, die eine Bewegungsbedingung erfüllen, größer als ein vorher bestimmter Grenzwert ist, und
ein viertes Bestimmungsteilmodul (323), das dazu ausgestaltet ist, das aktuelle Einzelbild als das Schlüsselbild zu bestimmen, wenn das erste Erfassungsteilmodul erfasst, dass die Anzahl der Bewegungsinformationen, die die Bewegungsbedingung erfüllen, größer als der vorher bestimmte Grenzwert ist.

8. Vorrichtung nach Anspruch 6, **dadurch gekennzeichnet, dass** das Bildbestimmungsmodul umfasst:
ein zweites Leseteilmodul (324), das dazu ausgestaltet ist, die Flag-Bit-Informationen jedes Zielblocks aus den Zielblockinformationen des aktuellen Einzelbilds zu lesen,
ein zweites Erfassungsteilmodul (325), das dazu ausgestaltet ist, zu erfassen, ob Flag-Bit-Informationen, die mit den Flag-Bit-Informationen des verschwundenen Zielblocks identisch sind, in den Flag-Bit-Informationen existieren, und
ein fünftes Bestimmungsteilmodul (326), das dazu ausgestaltet ist, das aktuelle Einzelbild als das Schlüsselbild zu bestimmen, wenn vom zweiten Erfassungsteilmodul erfasst wird, dass keine Flag-Bit-Informationen, die mit den Flag-Bit-Informationen des verschwundenen Zielblocks identisch sind, existieren.

9. Vorrichtung nach einem der Ansprüche 6 bis 8, **dadurch gekennzeichnet, dass** die Vorrichtung ferner umfasst:
ein Informationsbezugsmodul (350), das dazu ausgestaltet ist, jedes Einzelbild in dem Video und Sensorinformationen beim Aufnehmen des Einzelbilds zu beziehen, wobei die Sensorinformationen mindestens eine von Globalen Positionierungssystem-GPS-Informationen, Beschleunigungsinformationen und Empfindlichkeits-ISO-Informationen umfassen, und
ein Bildüberprüfungsmodul (360), das dazu ausgestaltet ist, das Einzelbild, das eine Überprüfungsbedingung gemäß den Sensorinformationen, die von dem Informationsbezugsmodul bezogen werden, nicht erfüllt, zu verwerfen und das Durchführen des Arbeitsschritts des Vergleichens des aktuellen Einzelbilds mit dem angrenzenden vorherigen Einzelbild vor dem aktuellen Einzelbild in dem Video, um die Zielblockinformationen zu erhalten, auszulösen.

10. Vorrichtung nach einem der Ansprüche 6 bis 9, **dadurch gekennzeichnet**, das das Bildbestimmungsmodul umfasst:
ein drittes Erfassungsteilmodul (327), das dazu ausgestaltet ist, wenn das aktuelle Einzelbild eine Person umfasst, zu erfassen, ob sich Haltungsinformationen der Person in dem aktuellen Einzelbild in Bezug auf das angrenzende vorherige Einzelbild ändern, und zu erfassen, ob die Zielblockinformationen in dem aktuellen Einzelbild unter Ausschluss der Person die vorher bestimmte Bedingung erfüllen, und
ein sechstes Bestimmungsteilmodul (328), das dazu ausgestaltet ist, wenn das dritte Bestimmungsteilmodul erfasst, dass sich die Haltungsinformationen der Person ändern und die Zielblockinformationen in dem aktuellen Einzelbild unter Ausschluss der Person die vorher bestimmte Bedingung erfüllen, das aktuelle Einzelbild als das Schlüsselbild zu bestimmen.

11. Vorrichtung zum Video-Browsing, wobei die Vorrichtung umfasst:
einen Prozessor (502) und
einen Speicher (504) zum Speichern von Anweisungen, die von dem Prozessor ausführbar sind,
wobei der Prozessor ausgestaltet ist zum:
Vergleichen eines aktuellen Einzelbilds mit einem angrenzenden vorherigen Einzelbild vor dem aktuellen Einzelbild in einem Video, um Zielblockinformationen zu erhalten, wobei die Zielblockinformationen Informationen sind, die durch Vergleichen eines Zielblocks in dem aktuellen Einzelbild mit einem Zielblock in dem angrenzenden vorherigen Einzelbild erhalten werden, wobei ein Zielblock durch Unterteilen von Inhalt in einem Einzelbild erhalten wird, wobei die Vorrichtung **dadurch gekennzeichnet ist, dass** der Prozessor ausgestaltet ist zum:
Vergleichen des Zielblocks in dem angrenzenden vorherigen Einzelbild und des Zielblocks in dem aktuellen Einzelbild,
wenn das aktuelle Einzelbild mindestens einen Zielblock umfasst, der in dem angrenzenden vorherigen Einzelbild nicht existiert, Bestimmen jedes nicht existierenden Zielblocks als einen neu hinzugefügten Zielblock und Setzen von Flag-Bit-Informationen für den neu hinzugefügten Zielblock, um die Zielblockinformationen jedes neu hinzugefügten Zielblocks zu erhalten, wobei es sich bei den Flag-Bit-Informationen um 1 plus der Anzahl von Schlüsselbildern handelt, die vor dem aktuellen Einzelbild bestimmt werden,
wenn das aktuelle Einzelbild mindestens einen Zielblock umfasst, der in dem angrenzenden vorherigen Einzelbild existiert, Bestimmen jedes existierenden Zielblocks als einen existierenden Zielblock und Berechnen von Bewegungsinformationen des existierenden Zielblocks in dem aktuellen Einzelbild in Bezug auf den entsprechenden Zielblock in dem angrenzenden vorherigen Einzelbild, um die Zielblockinformationen jedes existierenden Zielblocks zu erhalten, und
wenn das angrenzende vorherige Einzelbild mindestens einen Zielblock umfasst, der in dem aktuellen Einzelbild nicht existiert, Bestimmen jedes nicht existierenden Zielblocks als einen verschwundenen Zielblock, um die Zielblockinformationen jedes verschwundenen Zielblocks zu erhalten,
Bestimmen des aktuellen Einzelbilds als ein Schlüsselbild, wenn die Zielblockinformationen eine vorher bestimmte Bedingung erfüllen,
Bestimmen eines Einzelbilds neben dem aktuellen Einzelbild als das aktuelle Einzelbild und Fortsetzen des Durchführens des Schritts des Vergleichens des aktuellen Einzelbilds mit dem angrenzenden vorherigen Einzelbild vor dem aktuellen Einzelbild in dem Video, um die Zielblockinformationen zu erhalten, bis der Vergleich des letzten Einzelbilds in dem Video abgeschlossen ist, und
Abspielen von mindestens einem bestimmten Schlüsselbild der Reihe nach mit einer passenden Geschwindigkeit.

12. Computerprogramm, das Anweisungen zum Ausführen der Schritte eines Verfahrens zum Video-Browsing nach einem der Ansprüche 1 bis 5, wenn das Programm von einem Computer ausgeführt wird, beinhaltet.

13. Aufzeichnungsmedium, das von einem Computer lesbar ist und auf dem ein Computerprogramm aufgezeichnet ist, das Anweisungen zum Ausführen der Schritte eines Verfahrens zum Video-Browsing nach einem der Ansprüche 1 bis 5 beinhaltet.

## Revendications

1. Procédé de navigation vidéo, dans lequel le procédé comprend les étapes ci-dessous:
- comparer (101) une trame d'image en cours à une trame d'image précédente adjacente antérieure à la trame d'image en cours dans une vidéo, en vue d'obtenir des informations de bloc cible, les informations de bloc cible étant des informations obtenues en comparant un bloc cible dans la trame d'image en cours à un bloc cible dans la trame d'image précédente adjacente, un bloc cible étant obtenu en divisant des contenus dans une trame d'image, le procédé étant **caractérisé en ce que** l'étape de comparaison (101) comporte :
une comparaison du bloc cible dans la trame d'image précédente adjacente et le bloc cible dans la trame d'image en cours ;
si la trame d'image en cours comprend au moins un bloc cible qui est inexistant dans la trame d'image précédente adjacente, une détermination de chaque bloc cible inexistant comme étant un bloc cible nouvellement ajouté, et une définition des informations de bit indicateur pour le bloc cible nouvellement ajouté pour obtenir les informations de bloc cible de chaque bloc cible nouvellement ajouté, les informations de bit indicateur correspondant à « 1 » plus le nombre de trames clés qui sont déterminées avant la trame d'image en cours ;
si la trame d'image en cours comprend au moins un bloc cible qui existe dans la trame d'image précédente adjacente, une détermination de chaque bloc cible qui existe comme étant un bloc cible existant, et un calcul des informations de mouvement du bloc cible existant dans la trame d'image en cours par rapport au bloc cible correspondant dans la trame d'image précédente adjacente, pour obtenir les informations de bloc cible de chaque bloc cible existant ; et
si la trame d'image précédente adjacente comprend au moins un bloc cible inexistant dans la trame d'image en cours, une détermination de chaque bloc cible inexistant comme étant un bloc cible disparu, en vue d'obtenir les informations de bloc cible de chaque bloc cible disparu ;
- déterminer (102) la trame d'image en cours comme étant une trame clé, si les informations de bloc cible satisfont une condition prédéterminée ;
- déterminer (103) une trame d'image située à côté de la trame d'image en cours comme étant la trame d'image en cours, et poursuivre la mise en œuvre de l'étape de comparaison de la trame d'image en cours à la trame d'image précédente adjacente antérieure à la trame d'image en cours dans la vidéo, pour obtenir les informations de bloc cible jusqu'à ce que la comparaison de la dernière trame d'image dans la vidéo soit terminée ; et
- lire (104) au moins une trame clé déterminée, en séquence, à une vitesse appropriée.

2. Procédé selon la revendication 1, **caractérisé en ce que** déterminer la trame d'image en cours comme étant la trame clé si les informations de bloc cible satisfont la condition prédéterminée comprend :
lire les informations de mouvement de chaque bloc cible existant à partir des informations de bloc cible de la trame d'image en cours, les informations de mouvement comprenant au moins l'un des éléments parmi le nombre de temps de mouvement, un déplacement de mouvement et une destination de mouvement du bloc cible existant ;
détecter si le nombre des informations de mouvement satisfaisant une condition de mouvement est supérieur à un seuil prédéterminé ; et
déterminer la trame d'image en cours comme étant la trame clé s'il est détecté que le nombre des informations de mouvement satisfaisant la condition de mouvement est supérieur au seuil prédéterminé.

3. Procédé selon la revendication 1, **caractérisé en ce que** déterminer la trame d'image en cours comme étant la trame clé si les informations de bloc cible satisfont la condition prédéterminée comprend :
lire les informations de bit indicateur de chaque bloc cible à partir des informations de bloc cible de la trame d'image en cours ;
détecter si des informations de bit indicateur identiques aux informations de bit indicateur du bloc cible disparu existent dans les informations de bit indicateur ; et
déterminer la trame d'image en cours comme étant la trame clé s'il est détecté qu'il n'existe pas d'informations de bit indicateur identiques aux informations de bit indicateur du bloc cible disparu.

4. Procédé selon l'une quelconque des revendications 1 à 3, **caractérisé en ce que** le procédé comprend en outre les étapes ci-dessous :
acquérir (201) chaque trame d'image dans la vidéo et des informations de capteur lors de la prise de vue de la trame d'image, les informations de capteur comprenant au moins l'une parmi des informations de système mondial de positionnement, GPS, des informations d'accélération et des informations ISO de sensibilité ; et
éliminer la trame d'image ne satisfaisant pas une condition de filtrage selon les informations de capteur, et déclencher la mise en œuvre de l'étape (202) de comparaison de la trame d'image en cours à la trame d'image précédente adjacente antérieure à la trame d'image en cours dans la vidéo, pour obtenir les informations de bloc cible.

5. Procédé selon l'une quelconque des revendications 1 à 4, **caractérisé en ce que** déterminer la trame d'image en cours comme étant la trame clé si les informations de bloc cible satisfont la condition prédéterminée comprend :
si la trame d'image en cours comprend un personnage, détecter si des informations de posture du personnage dans la trame d'image en cours changent par rapport à la trame d'image précédente adjacente, et détecter si les informations de bloc cible dans la trame d'image en cours, à l'exclusion du personnage, satisfont la condition prédéterminée ; et
s'il est détecté que les informations de posture du personnage changent et que les informations de bloc cible dans la trame d'image en cours, à l'exclusion du personnage, satisfont la condition prédéterminée, déterminer la trame d'image en cours comme étant la trame clé.

6. Dispositif de navigation vidéo, comprenant :
un module de comparaison d'images (310) configuré pour comparer une trame d'image en cours à une trame d'image précédente adjacente antérieure à la trame d'image en cours dans une vidéo, pour obtenir des informations de bloc cible, les informations de bloc cible étant des informations obtenues en comparant un bloc cible dans la trame d'image en cours à un bloc cible dans la trame d'image précédente adjacente, un bloc cible étant obtenu en divisant des contenus dans une trame d'image, le dispositif étant **caractérisé en ce que** le module de comparaison d'images (310) comprend :
un sous-module de comparaison de cibles (311) configuré pour comparer le bloc cible dans la trame d'image précédente adjacente au bloc cible dans la trame d'image en cours ;
un premier sous-module de détermination (312) configuré pour, si la trame d'image en cours comprend au moins un bloc cible qui est inexistant dans la trame d'image précédente adjacente à travers la comparaison du sous-module de comparaison de bloc cible, déterminer chaque bloc cible inexistant comme étant un bloc cible nouvellement ajouté, et définir des informations de bit indicateur pour le bloc cible nouvellement ajouté, pour obtenir les informations de bloc cible de chaque bloc cible nouvellement ajouté, les informations de bit indicateur correspondant à « 1 » plus le nombre de trames clés qui sont déterminées avant la trame d'image en cours ;
un deuxième sous-module de détermination (313) configuré pour, si la trame d'image en cours comprend au moins un bloc cible qui existe dans la trame d'image précédente adjacente, à travers la comparaison du sous-module de comparaison de bloc cible, déterminer chaque bloc cible qui existe comme étant un bloc cible existant, et calculer des informations de mouvement du bloc cible existant dans la trame d'image en cours par rapport au bloc cible correspondant dans la trame d'image précédente adjacente, pour obtenir les informations de bloc cible de chaque bloc cible existant ; et
un troisième sous-module de détermination (314) configuré pour, si la trame d'image précédente adjacente comprend au moins un bloc cible inexistant dans la trame d'image en cours, à travers la comparaison du sous-module de comparaison de bloc cible, déterminer chaque bloc cible inexistant comme étant un bloc cible disparu, en vue d'obtenir les informations de bloc cible de chaque bloc cible disparu ;
un module de détermination d'image (320) configuré pour déterminer la trame d'image en cours comme étant une trame clé, si les informations de bloc cible obtenues par le module de comparaison d'images satisfont une condition prédéterminée ;
un module d'exécution d'opérations (330) configuré pour déterminer une trame d'image située à côté de la trame d'image en cours comme étant la trame d'image en cours, et à poursuivre la mise en œuvre de l'étape de comparaison de la trame d'image en cours à la trame d'image précédente adjacente antérieure à la trame d'image en cours dans la vidéo, pour obtenir les informations de bloc cible jusqu'à ce que la comparaison de la dernière trame d'image dans la vidéo soit terminée ; et
un module de lecture d'image (340) configuré pour lire au moins une trame clé déterminée par le module de détermination d'image, en séquence, à une vitesse appropriée.

7. Dispositif selon la revendication 6, **caractérisé en ce que** le module de détermination d'image comprend :
un premier sous-module de lecture (321) configuré pour lire les informations de mouvement de chaque bloc cible existant à partir des informations de bloc cible de la trame d'image en cours, les informations de mouvement comprenant au moins l'un des éléments parmi le nombre de temps de mouvement, un déplacement de mouvement et une destination de mouvement du bloc cible existant ;
un premier sous-module de détection (322) configuré pour détecter si le nombre des informations de mouvement satisfaisant une condition de mouvement est supérieur à un seuil prédéterminé ; et
un quatrième sous-module de détermination (323) configuré pour déterminer la trame d'image en cours comme étant la trame clé si le premier sous-module de détection détecte que le nombre des informations de mouvement satisfaisant la condition de mouvement est supérieur au seuil prédéterminé.

8. Dispositif selon la revendication 6, **caractérisé en ce que** le module de détermination d'image comprend :
un second sous-module de lecture (324) configuré pour lire les informations de bit indicateur de chaque bloc cible à partir des informations de bloc cible de la trame d'image en cours ;
un deuxième sous-module de détection (325) configuré pour détecter si des informations de bit indicateur identiques aux informations de bit indicateur du bloc cible disparu existent dans les informations de bit indicateur ; et
un cinquième sous-module de détermination (326) configuré pour déterminer la trame d'image en cours comme étant la trame clé si le deuxième sous-module de détection détecte qu'il n'existe pas d'informations de bit indicateur identiques aux informations de bit indicateur du bloc cible disparu.

9. Dispositif selon l'une quelconque des revendications 6 à 8, **caractérisé en ce que** le dispositif comprend en outre :
un module d'acquisition d'informations (350) configuré pour acquérir chaque trame d'image dans la vidéo et des informations de capteur lors de la prise de vue de la trame d'image, les informations de capteur comprenant au moins l'une parmi des informations de système mondial de positionnement, GPS, des informations d'accélération et des informations ISO de sensibilité ; et
un module de filtrage d'image (360) configuré pour éliminer la trame d'image ne satisfaisant pas une condition de filtrage selon les informations de capteur acquises par le module d'acquisition d'informations, et pour déclencher la mise en œuvre de l'opération de comparaison de la trame d'image en cours à la trame d'image précédente adjacente antérieure à la trame d'image en cours dans la vidéo, pour obtenir les informations de bloc cible.

10. Dispositif selon l'une quelconque des revendications 6 à 9, **caractérisé en ce que** le module de détermination d'image comprend :
un troisième sous-module de détection (327) configuré pour, si la trame d'image en cours comprend un personnage, détecter si des informations de posture du personnage dans la trame d'image en cours changent par rapport à la trame d'image précédente adjacente, et détecter si les informations de bloc cible dans la trame d'image en cours, à l'exclusion du personnage, satisfont la condition prédéterminée ; et
un sixième sous-module de détermination (328) configuré pour, si le troisième sous-module de détection détecte que les informations de posture du personnage changent et que les informations de bloc cible dans la trame d'image en cours, à l'exclusion du personnage, satisfont la condition prédéterminée, déterminer la trame d'image en cours comme étant la trame clé.

11. Dispositif de navigation vidéo, comprenant :
un processeur (502) ; et
une mémoire (504) destinée à stocker des instructions exécutables par le processeur ;
dans lequel le processeur est configuré pour :
comparer une trame d'image en cours à une trame d'image précédente adjacente antérieure à la trame d'image en cours dans une vidéo, pour obtenir des informations de bloc cible, les informations de bloc cible étant des informations obtenues en comparant un bloc cible dans la trame d'image en cours à un bloc cible dans la trame d'image précédente adjacente, un bloc cible étant obtenu en divisant des contenus dans une trame d'image, le dispositif étant **caractérisé en ce que** le processeur est configuré pour :
comparer le bloc cible dans la trame d'image précédente adjacente et le bloc cible dans la trame d'image en cours ;
si la trame d'image en cours comprend au moins un bloc cible qui est inexistant dans la trame d'image précédente adjacente, déterminer chaque bloc cible inexistant comme étant un bloc cible nouvellement ajouté, et définir des informations de bit indicateur pour le bloc cible nouvellement ajouté pour obtenir les informations de bloc cible de chaque bloc cible nouvellement ajouté, les informations de bit indicateur correspondant à « 1 » plus le nombre de trames clés qui sont déterminées avant la trame d'image en cours ;
si la trame d'image en cours comprend au moins un bloc cible qui existe dans la trame d'image précédente adjacente, déterminer chaque bloc cible qui existe comme étant un bloc cible existant, et calculer des informations de mouvement du bloc cible existant dans la trame d'image en cours par rapport au bloc cible correspondant dans la trame d'image précédente adjacente, pour obtenir les informations de bloc cible de chaque bloc cible existant ; et
si la trame d'image précédente adjacente comprend au moins un bloc cible inexistant dans la trame d'image en cours, déterminer chaque bloc cible inexistant comme étant un bloc cible disparu, pour obtenir les informations de bloc cible de chaque bloc cible disparu ;
déterminer la trame d'image en cours comme étant une trame clé, si les informations de bloc cible satisfont une condition prédéterminée ;
déterminer une trame d'image située à côté de la trame d'image en cours comme étant la trame d'image en cours, et poursuivre la mise en œuvre de l'étape de comparaison de la trame d'image en cours à la trame d'image précédente adjacente antérieure à la trame d'image en cours dans la vidéo, pour obtenir les informations de bloc cible jusqu'à ce que la comparaison de la dernière trame d'image dans la vidéo soit terminée ; et
lire au moins une trame clé déterminée, en séquence, à une vitesse appropriée.

12. Programme d'ordinateur incluant des instructions pour exécuter les étapes d'un procédé de navigation vidéo selon l'une quelconque des revendications 1 à 5, lorsque ledit programme est exécuté par un ordinateur.

13. Support d'enregistrement lisible par un ordinateur et sur lequel est enregistré un programme d'ordinateur incluant des instructions pour exécuter les étapes d'un procédé de navigation vidéo selon l'une quelconque des revendications 1 à 5.
